# EUROPEAN PATENT APPLICATION

(11) **EP 2 088 720 A1**
(43) Date of publication of application: **12.08.2009**
(21) Application number: 08706624.7
(22) Date of filing: 02.02.2008
(51) Int. Cl.: H04L 12/56

(54) **A METHOD AND SYSTEM FOR DISCOVERING THE FLOW MEDIA SERVICE AND AN APPARATUS FOR DISCOVERING SERVICE**

(30) Priority: 12.02.2007 CN 200710084513
(71) Applicant: Huawei Technologies Co., Ltd., Longgang District, Shenzhen Guangdong 518129 (CN)
(72) Inventor: LI, Youying, Shenzhen Guangdong 518129 (CN); YAN, Jun, Shenzhen Guangdong 518129 (CN); WANG, Feng, Shenzhen Guangdong 518129 (CN); WU, Xiangyang, Shenzhen Guangdong 518129 (CN); LI, Jincheng, Shenzhen Guangdong 518129 (CN)
(74) Representative: Pfenning, Meinig & Partner GbR
(86) International application number: PCT/CN2008/070248
(87) International publication number: WO 2008/098500

(57) **Abstract**

The present invention provides a method and system for discovering streaming services, and a service discovery apparatus. The method includes steps as follows: The IMS network side generates streaming service information, and sends the information to a UE according to the information of the UE accessing the IMS network. The method, system and service discovery apparatus are based on IMS technologies. The service discovery unit may send the streaming service information to the UE automatically according to the information of the UE accessing the IMS network, without requiring requests from the UE or the address of the EPG generating unit.

## Description

### Cross References to Related Applications

This application is a continuation application of PCT/CN2008/070248, filed February 2, 2008, which claims priority to the Chinese Patent Application No. 200710084513.5, filed with the Chinese Patent Office on February 12, 2007 and entitled "Method and System for Discovering Streaming Services, and Service Discovery Apparatus ", contents of which are incorporated herein by reference in their entireties.

### Field of the Invention

The present invention relates to multimedia technologies, and in particular, to a method and system for discovering streaming services, and a service discovery apparatus.

### Background of the Invention

The streaming service is a new service that has developed rapidly over recent years. The streaming service transmits multimedia files on a Packet Switched (PS) network based on the streaming transmission technology, including video and audio file contents. A user can play such contents promptly while accessing them without downloading fully. The streaming transmission technology puts the continuous video and audio information into a service server after processing the information, so that the user can play the media stream during downloading, without waiting for completion of downloading the whole file to the local device.

In the streaming service, an Electronic Program Guide (EPG) or a similar service is provided to the user. The EPG guides the user and enables the user to understand the services available currently. The EPG can also guide the user to subscribe programs and trigger the services. The process of providing an EPG is a streaming service discovery process.

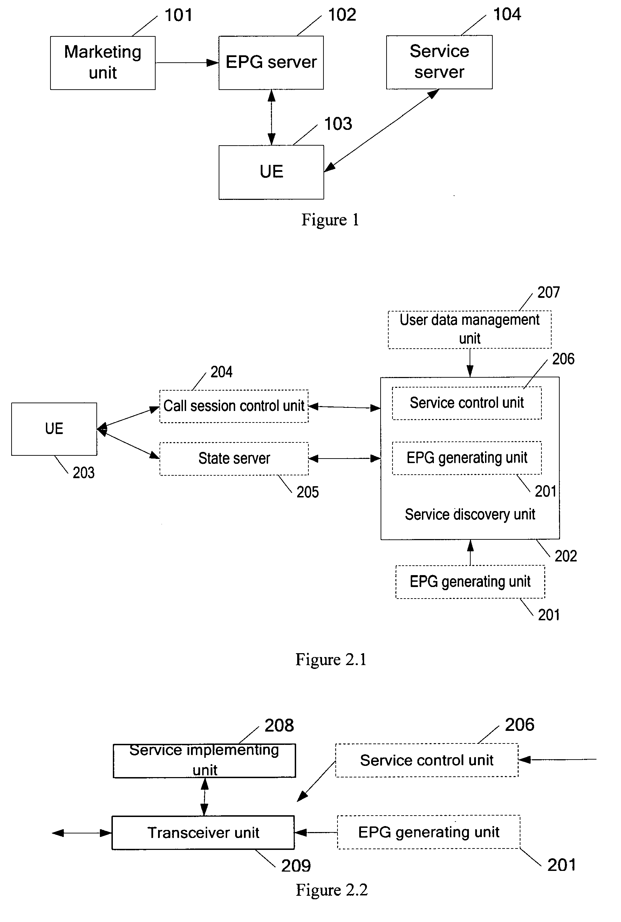

Figure 1 shows the structure of a system for discovering streaming services in the prior art. As shown in Figure 1, the marketing unit 101 is adapted to provide program information to the EPG server 102; the EPG server 102 is adapted to generate an EPG according to the program information provided by the marketing unit 101, and provide the EPG to the User Equipment (UE) 103; the service server 104 is adapted to provide program contents for the UE.

The specific process is as follows: The UE 103 obtains the address of the EPG server 102, and accesses the EPG server 102 according to the address and requests the EPG server 102. After receiving the request, the EPG server 102 sends an EPG to the UE 103. According to the address of the program contents in the EPG, the UE 103 manually sets the connection to the service server 104 to obtain the program contents.

The foregoing method for discovering streaming services is applicable to the existing IP network, and applicable to the terminals that support the Session Initiation Protocol (SIP). However, the service discovery mechanism of the method is inflexible. To obtain an EPG, the user has to obtain the address of the EPG server and sends a request actively. The EPG server may send an EPG to the user only after receiving a request according to the user address in the request, but cannot send an EPG automatically. The process for the UE to obtain an EPG is rather complicated, which brings a poor user experience. The foregoing process of sending an EPG is also a process of discovering streaming services. Therefore, in the prior art, no method for discovering streaming services automatically can bring a good user experience.

### Summary of the Invention

An embodiment of the present invention provides a method and system for discovering streaming services, and a service discovery apparatus to enable automatic discovery of streaming service information.

A method for discovering streaming services includes: The IP Multimedia Subsystem (IMS) network side generates streaming service information, and sends the streaming service information to a UE according to the information of the UE accessing the IMS network.

A system for discovering streaming services includes:
a service discovery unit at the network side, adapted to generate streaming service information, and send streaming service information to a UE according to the information of the UE accessing the IMS network; and
a UE, adapted to access the IMS network.

A service discovery apparatus includes:
a service implementing unit, adapted to generate streaming service information according to a received EPG, and send the streaming service information to a transceiver unit; and
a transceiver unit, adapted to receive an EPG and send the EPG to the service implementing unit, obtain the information of the UE accessing the IMS network, and send the streaming service information.

### Brief Description of the Drawings

Figure 1 shows the structure of a system for discovering streaming services in the prior art;

Figure 2.1 shows the structure of a system for discovering streaming services in an embodiment of the present invention;

Figure 2.2 shows the structure of a service discovery apparatus in an embodiment of the present invention;

Figure 3 is a flowchart of the first method for discovering streaming services in an embodiment of the present invention;

Figure 4 is a flowchart of the second method for discovering streaming services in an embodiment of the present invention;

Figure 5 is a flowchart of the third method for discovering streaming services in an embodiment of the present invention;

Figure 6 is a flowchart of the fourth method for discovering streaming services in an embodiment of the present invention;

Figure 7 is a flowchart of the fifth method for discovering streaming services in an embodiment of the present invention; and

Figure 8 is a flowchart of the sixth method for discovering streaming services in an embodiment of the present invention.

### Detailed Description of the Embodiments

For better understanding of the technical solution, objectives and merits of the present invention, the present invention is hereinafter described in detail with reference to accompanying drawings and preferred embodiments.

The IMS is a subsystem overlaid by the 3GPP R5 onto the existing PS domain in a Wideband Code Division Multiple Access (WCDMA) network. The IMS uses a PS domain as a bearer channel for its upper-layer control signaling and media transmission, and introduces the SIP as a service control protocol. The IMS provides rich multimedia services by separating service control from bearer control. The SIP is one of the multimedia communication system frameworks developed by the Internet Engineering Task Force (IETF), and is an application-layer protocol designed to create, modify or terminate a multimedia session. By working with the Real-time Transfer Protocol/Real-time Transfer Control Protocol (RTP/RTCP), Session Description Protocol (SDP) and Real Time Streaming Protocol (RTSP), the SIP participates in the session creation and media negotiation in the IMS. Once a session is created, the media stream is transferred directly at the bearer layer over the RTP. Different types of media can be exchanged flexibly in a session.

A method for discovering streaming services in an embodiment of the present invention includes the following: The IMS network side generates streaming service information, and sends the streaming service information to a UE according to the information of the UE accessing the IMS network.

The streaming service information may include an EPG and/or the EPG portal information and so on. The EPG portal information may be an address of the EPG generating unit. The UE may select a streaming service or an available EPG based on the contents included in the streaming service information.

The preceding generation and transmission steps may be performed by the service discovery unit in the IMS network-side.

The service discovery unit is a new device or is configured in a former IMS device.

The process of generating streaming service information may include:
generating streaming service information according to the EPG; or
obtaining the EPG portal information from other servers that know the EPG portal information, and generating the streaming service information that contains the EPG portal information according to the EPG portal information.

The EPG and the streaming service information may be generated by the same apparatus such as a service discovery unit; or generated by two separate apparatuses, for example, by an EPG generating unit and a service discovery unit respectively. The specific process may include the following steps:

The network-side EPG generating unit generates an EPG, and sends the EPG to the service discovery unit; according to the received EPG, the service discovery unit generates streaming service information containing the EPG and/or EPG portal information; or

The EPG generating unit is configured in the network-side service discovery unit; the service discovery unit generates an EPG, and generates streaming service information containing the EPG and/or EPG portal information according to the EPG; or

The network-side EPG generating unit generates an EPG, and sends the EPG to the service discovery unit; meanwhile, the EPG generating unit configured in the service discovery unit generates an EPG; according to the EPG received from the EPG generating unit and the EPG generated by the service discovery unit, the service discovery unit generates streaming service information containing the EPG and/or EPG portal information.

According to the information of the UE accessing the IMS network, the IMS network side sends streaming service information in the following two modes:

Mode 1: The service discovery unit subscribes to the UE status from the status server; the status server monitors the status of the UE, and notifies the information of the UE accessing the IMS network to the service discovery unit after detecting that the UE accesses the IMS network.

Further, after detecting that the status of the UE changes, the status server notifies the change of the UE status to the service discovery unit; after receiving the UE status change notification, the service discovery unit sends the generated streaming service information to the UE according to the information about change of the UE status.

The UE status may be: UE registration status, UE status, and UE location information.

The UE may publish status information according to the status publishing rules in the SIP, for example, the UE publishes the status information through the Publish method.

The service discovery unit obtains the UE status information through subscription/notification. The subscription/notification is based on the event notification framework of the SIP. The service discovery unit subscribes to the UE status information from the status server through the Subscribe method; and the status server notifies the UE status information to the service discovery unit through the Notify method.

Mode 2: The UE performs IMS registration to the call session unit; the call session unit initiates a third-party registration to the service discovery unit on behalf of the UE. After completing the third-party registration, the service discovery unit obtains the information of the UE accessing the IMS network, and sends the generated streaming service information to the UE; or

The UE performs IMS registration to the call session unit; the call session unit initiates a third-party registration to the service control unit in the IMS network on behalf of the UE. After completing the third-party registration, the service control unit notifies the service discovery unit. After obtaining the information of the UE accessing the IMS network, the service discovery unit sends the generated streaming service information to the UE.

The foregoing third-party registration process sends the information of the UE accessing the IMS network to the service discovery unit; the foregoing IMS registration information and the third-party registration information may include the relevant information such as UE identifier or address.

The streaming service information may be sent to the IMS-registered UE according to the delivery conditions; and the delivery conditions may be obtained from subscription data of the user. For example, the IMS-registered UE may set the subscription data to send at regular intervals; or, if there is more than one EPG, the IMS-registered UE may set the condition to send the first EPG only.

The streaming service information may be sent according to the channel for registering the UE: The service discovery unit sends the generated streaming service information to the call session unit; and the call session unit sends the streaming service information to the UE; or

The service discovery unit sends the generated streaming service information to the service control unit; the service control unit sends the streaming service information to the call session unit; and the call session unit sends the streaming service information to the UE.

The streaming service information may also be sent to the UE directly according to the UE address in the IMS registration information of the UE.

As shown in Figure 2.1, a system for discovering streaming services includes: a service discovery unit 202 at the IMS network side, and a UE 203.

The service discovery unit 202 is adapted to generate streaming service information, and send streaming service information to the UE 203 according to the information of the UE accessing the IMS network.

The UE 203 is adapted to access the IMS network.

The streaming service information may be: EPG, and/or EPG portal information.

The system may further include: an EPG generating unit 201, adapted to generate an EPG and send the EPG to the service discovery unit 202.

The service discovery unit 202 is adapted to generate streaming service information according to the EPG provided by the EPG generating unit 201.

The EPG generating unit 201 may be an EPG server.

The EPG generating unit 201 may be a stand-alone device or configured in the service discovery unit 202. There may be multiple EPG generating units, some of which are configured in a stand-alone device and others are configured in the service discovery unit 202.

Moreover, the service discovery unit 202 may also obtain the information about the EPG from other servers that know the EPG information, and then generate the streaming service information that contains the EPG portal information according to the EPG information.

The service discovery unit 202 may be an Application Server (AS).

The system may further include: a call session control unit 204 and a service control unit 206.

The call session control unit 204 is adapted to receive the IMS registration request sent by the UE, perform IMS registration for the UE 203, and initiate a third-party registration request to the service control unit 206.

The service control unit 206 is adapted to perform third-party registration and then notify the status of the UE 203 accessing the IMS network to the service discovery unit 202.

The service control unit 206 may be a stand-alone device or configured in the service discovery unit 202. If the service control unit 206 is a stand-alone device, it may be an AS.

The system may further include a status server 205, adapted to: monitor the status of the UE 203 after receiving the subscription request of the service discovery unit 202; and notify the information of the UE accessing the IMS network to the service discovery unit 202 after detecting that the UE accesses the IMS network.

The service discovery unit 202 is further adapted to subscribe to the status of the UE from the status server, and obtain the status of the UE 203 accessing the IMS network according to the UE status change information.

The status server 205 is further adapted to notify the status change of the UE 203 to the service discovery unit 202 after detecting that the status of the UE 203 changes; after receiving the UE status change information, the service discovery unit 202 sends the generated streaming service information to the UE 203 according to the UE status change information.

The status server 205 may be a presence server.

The system may further include a user data management unit 207, adapted to store the subscription data of the user. The service discovery unit 202 may obtain the subscription data of the user from the user data management unit 207, and send streaming service information according to the delivery conditions in the subscription data.

The user data management unit 207 may be a User Provisioning Service Function (UPSF) entity.

The following describes the structure of a service discovery apparatus. As shown in Figure 2.2, the apparatus includes a service implementing unit 208 and a transceiver unit 209.

The service implementing unit 208 is adapted to generate streaming service information according to the received EPG, and send the streaming service information.

The EPG information may be an EPG or the EPG portal information.

The transceiver unit 209 is adapted to receive an EPG and send the EPG to the service implementing unit 208, obtain the information of the UE accessing the IMS network, and send the streaming service information.

The service discovery unit may further include: an EPG generating unit 201, adapted to generate an EPG and send the EPG to the transceiver unit 209.

The service discovery unit may further include a service control unit 206, adapted to: receive a third-party registration request and perform third-party registration, and notify the information of the UE accessing the IMS network to the transceiver unit 209.

The following describes the method for discovering streaming services in detail, taking the foregoing system as an example.

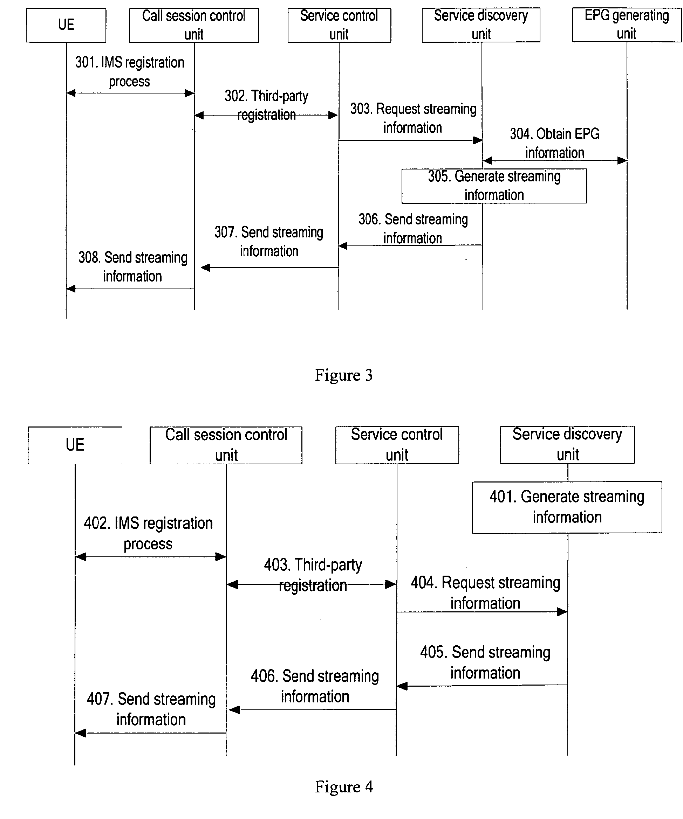

Figure 3 is a flowchart of the method in which the information about the UE accessing the IMS network is obtained through third-party registration and a separate EPG generating unit is configured. As shown in Figure 3, the method includes the following steps:

Step 301: The UE sends an IMS registration request to the call session control unit; the call session control unit completes the UE registration and then replies a response.

Step 301 is designed to enable the UE to access the IMS network.

Step 302: Upon success of registration, the call session control unit initiates a third-party registration to the service control unit on behalf of the UE, and replies a response upon completion of registration.

Step 303: Upon completion of a third-party registration, the service control unit requests the streaming service information from the service discovery unit.

In step 302 and step 303, the UE accesses the IMS network, and the service discovery unit is triggered to send streaming information.

Step 304: The service discovery unit obtains EPG information from the EPG generating unit.

The EPG information may be an EPG or the EPG portal information.

Step 305: The service discovery unit generates streaming information according to the EPG information.

The streaming information may be EPG portal information.

The foregoing step 304 and step 305 may be executed before step 301 or during any step of step 301 to step 303, there is no time restriction.

Step 306: The service discovery unit sends streaming information to the service control unit.

Step 307: The service control unit sends the streaming information to the call session control unit.

Step 308: The call session control unit sends the streaming information to the UE.

The foregoing step 306 and step 307 may be skipped; instead, the service discovery unit may send the streaming information to the UE directly.

Figure 4 is a flowchart of the method in which the information about the UE accessing the IMS network is obtained through third-party registration and the EPG generating unit is configured in the service discovery unit. As shown in Figure 4, the method includes the following steps:

Step 401: The service discovery unit generates streaming information.

Step 402: The UE sends an IMS registration request to the call session control unit; the call session control unit performs the UE registration and then replies a response.

Step 403: Upon success of registration, the call session control unit initiates third-party registration to the service control unit on behalf of the UE, and replies a response upon completion of registration.

Step 404: Upon completion of third-party registration, the service control unit requests the streaming service information from the service discovery unit.

Step 405: The service discovery unit sends streaming information to the service control unit.

Step 406: The service control unit sends the streaming information to the call session control unit.

Step 407: The call session control unit sends the streaming information to the UE.

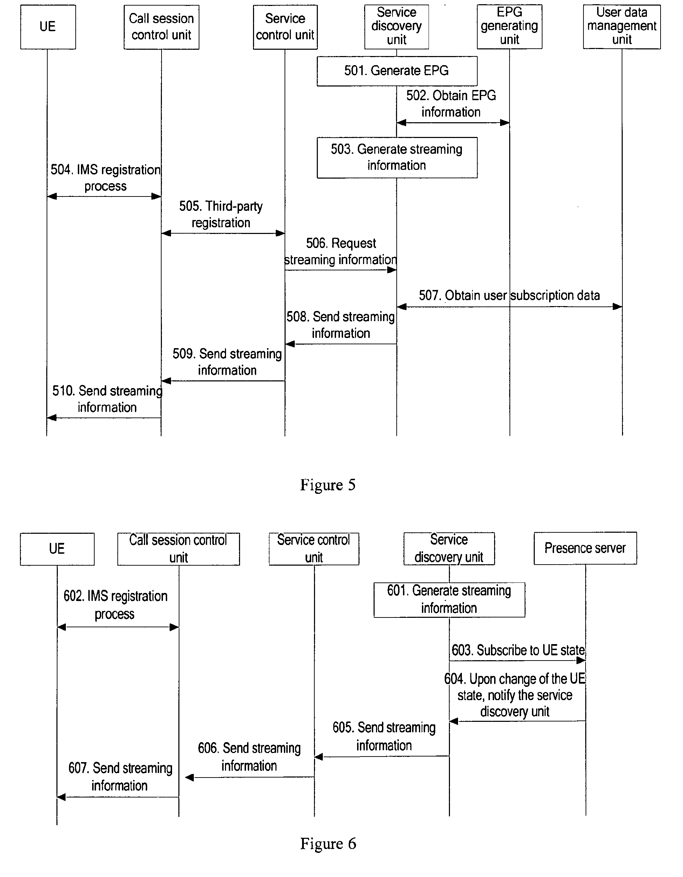

Figure 5 is a flowchart of the method in which a separate EPG generating unit is configured and the service discovery unit is also capable of generating an EPG. As shown in Figure 5, the method includes the following steps:

Step 501: The service discovery unit generates an EPG.

Step 502: The service discovery unit obtains EPG information from the EPG generating unit.

Step 503: The service discovery unit generates streaming information according to the EPG and the EPG information.

Step 504: The UE sends an IMS registration request to the call session control unit; the call session control unit performs the UE registration and then replies a response.

Step 505: Upon success of registration, the call session control unit initiates third-party registration to the service control unit on behalf of the UE, and replies a response upon completion of registration.

Step 506: Upon completion of third-party registration, the service control unit requests the streaming service information from the service discovery unit.

Step 507: The service discovery unit obtains the user subscription data of the user from the user data management unit.

Step 508: The service discovery unit sends streaming information to the service control unit according to the delivery conditions in the user subscription data.

Step 509: The service control unit sends the streaming information to the call session control unit.

Step 510: The call session control unit sends the streaming information to the UE.

Figure 6 is a flowchart of the method in which the status server obtains the information about the UE accessing the IMS network. As shown in Figure 6, the method includes the following steps:

Step 601: The service discovery unit generates streaming information.

Step 602: The UE sends an IMS registration request to the call session control unit; the call session control unit performs the UE registration and then replies a response.

Step 603: The service discovery unit subscribes to the UE status from the presence server.

Step 603 may be executed before step 602. That is, the service discovery unit subscribes to the UE status from the presence server first, and then the UE performs IMS registration; or the two steps may be executed at the same time.

Step 604: Upon change of the UE status, the presence server notifies the service discovery unit of the UE status change.

For example, after the presence server detects change of the UE status (such as user login or user location change) and notifies the service discovery unit of the change, the service discovery unit sends streaming service information according to the information about change of the UE status.

Through step 603 and step 604, the service discovery unit accesses the IMS network, and the streaming information is sent.

Step 605: The service discovery unit sends streaming information to the service control unit.

In step 605, the service discovery unit may further decide whether to send streaming information to the service control unit according to the status after the UE accesses the IMS network.

Further, in step 605, the streaming information may be sent according to the delivery conditions in the user subscription data obtained from the user data management unit.

Step 606: The service control unit sends the streaming information to the call session control unit.

Step 607: The call session control unit sends the streaming information to the UE.

In the foregoing processes, a separate service control unit is configured. The following describes the method for the service discovery unit to perform functions of the service control unit in the scenario where the service control unit is configured in the service discovery unit.

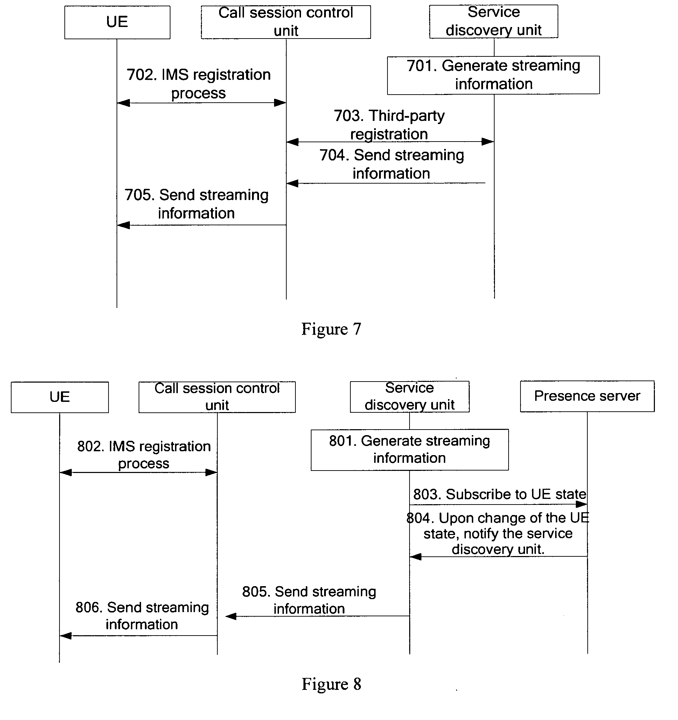

Figure 7 is a flowchart of the method in which the service control unit is configured inside a service discovery unit and the information about the UE accessing the IMS network is obtained through third-party registration. As shown in Figure 7, the method includes the following steps:

Step 701: The service discovery unit generates streaming information.

Step 702: The UE sends an IMS registration request to the call session control unit; the call session control unit performs the UE registration and then replies a response.

Step 703: Upon success of registration, the call session control unit initiates third-party registration to the service discovery unit on behalf of the UE, and replies a response upon completion of registration.

Step 704: Upon completion of third-party registration, the service discovery unit sends streaming information to the call session control unit.

Step 705: The call session control unit sends the streaming information to the UE.

Figure 8 is a flowchart of the method in which the service control unit is configured inside a service discovery unit and the information about the UE accessing the IMS network is obtained through a status server. As shown in Figure 8, the method includes the following steps:

Step 801: The service discovery unit generates streaming information.

Step 802: The UE sends an IMS registration request to the call session control unit; the call session control unit performs the UE registration and then replies a response.

Step 803: The service discovery unit subscribes to the UE status from the presence server.

Step 803 may be executed before or after step 802.

Step 804: Upon change of the UE status, the server notifies the service discovery unit of the UE status change.

Step 805: The service discovery unit sends streaming information to the session control unit.

In step 805, the service discovery unit may further decide whether to send streaming information to the service control unit according to the status after the UE accesses the IMS network.

Further, in step 805, the streaming information may be sent according to the delivery conditions in the user subscription data obtained from the user data management unit.

Step 806: The call session control unit sends the streaming information to the UE.

Besides, in the foregoing embodiments, triggering by the third-party registration and triggering by change of the UE status may be applied at the same time.

As can be seen from the preceding descriptions, the method and system for discovering streaming services and the service discovery unit provided by embodiments of the present invention are based on the IMS technology; the service discovery unit can send the streaming service information to the UE automatically according to the information of the UE accessing the IMS network, without requiring requests from the UE or the address of the EPG generating unit; the user can easily obtain the EPG or the EPG portal information without complicated operations, and this brings good user experiences.

Further, the sent streaming service information may contain the EPG portal information, and the UE can select program contents according to the EPG portal information, thus making it unnecessary to set the UE manually to connect to the service server in the prior art.

The preceding embodiments are exemplary embodiments of the present invention only and not intended to limit the present invention. Any modification, equivalent substitution or improvement without departing from the spirit and principle of the present invention should be covered in the scope of protection of the present invention.

## Claims

1. A method for discovering streaming service, comprising:
generating streaming service information by IP multimedia subsystem, IMS, network side, sending the streaming service information to a user equipment, UE, according to the information of the user equipment accessing the IMS.

2. The method according to claim 1, wherein, generating streaming service information by the service discovery unit of the IMS network side.

3. The method according to claim 2, wherein, the service discovery unit comprises a new device or is configured in a former IMS device.

4. The method according to claim 2, wherein, the step of generating streaming service information comprises:
generating an Electronic Program Guide, EPG, by the network-side EPG generating unit, generating the streaming service information containing the EPG and/or EPG portal information by the service discovery unit according to the EPG; or
generating an EPG, and generating the streaming service information containing the EPG and/or EPG portal information according to the EPG by the service discovery unit which contains a EPG generating unit; or
generating an EPG, and sending the EPG to the service discovery unit by the network-side EPG generating unit, the EPG generating unit configured in the service discovery unit generating an EPG, generating the streaming service information containing the EPG and/or EPG portal information by the service discovery unit according to the EPG obtained from the EPG generating unit and the EPG generated by the service discovery unit; or
obtaining the EPG portal information from the sever knowing the EPG information, and generating the streaming service information containing the EPG portable information by the network-side service discovery unit.

5. The method according to claim 2. 3 or 4, wherein, the step of sending the streaming service information to a user equipment according to the information of the user equipment accessing the IMS comprises:
subscribing to the UE status from the status server by the service discovery unit; monitoring the status of the UE and notifying the information of the UE accessing the IMS network to the service discovery unit by the status server after detecting that the UE accesses the IMS network, sending the streaming service information to the UE by the service discovery unit.

6. The method according to claim 5, wherein, before sending the streaming service information to the UE by the service discovery unit ,the method further comprises the step:
monitoring the UE status change, notifying the information of the UE status change to the service discovering unit by the status sever, after receiving the information of the UE status change, sending the streaming service information to the UE by the service discovering unit according to the information of the UE status change.

7. The method according to claim 2. 3 or 4, wherein, the step of sending the streaming service information to a user equipment according to the information of the user equipment accessing the IMS comprises:
performing IMS registration to the call session unit by the UE, initiating a third-party registration to the service discovery unit by the call session unit , after completing the third-party registration, obtaining the information of the UE accessing the IMS network and sending the generated streaming service information to the UE by the service discovery unit; or
performing IMS registration to the call session unit in the IMS network by the UE, initiating a third-party registration to the service control unit in the IMS network on behalf of the UE by the call session unit, after completing the third-party registration, notifying the service discovery unit by the service control unit, after obtaining the information of the UE accessing the IMS network, sending the generated streaming service information to the UE by the service discovery unit.

8. The method according to claim 1, wherein, the step of sending the streaming service information to the UE comprising: sending the streaming service information to the UE according to subscription data of the user.

9. The method according to claim 7, wherein, the step of sending the streaming service information to the UE comprising:
sending the streaming service information to the call session unit by the service discovery unit, sending the streaming service information to the UE by the call session unit; or
sending the streaming service information to the service control unit by the service discovery unit, sending the streaming service information to the call session unit by the service control unit, sending the streaming service information to the UE by the call session unit.

10. A system for discovering steaming service, comprising:
a service discovery unit (202) in the IMS network side, adapted to generate streaming service information, and send the streaming service information to the UE (203) according to the information of the UE accessing the IMS network.
a UE (203), adapted to access the IMS network.

11. The system according to claim 10, wherein, the system further comprises:
an EPG generating unit (201), adapted to generate an EPG and send the EPG to the service discovery unit (202).
the service discovery unit (202), adapted to generate streaming service information containing the EPG and/or the EPG portal information according to the EPG provided by the EPG generating unit (201).

12. The system according to claim 11, wherein, the EPG generating unit (201) is a stand-alone device or configured in the service discovery unit (202) or are multiple, some of the EPG generating unit (201) are configured in a stand-alone device and others are configured in the service discovery unit (202).

13. The system according to claim 10, wherein, the system further comprises:
a call session control unit (204), adapted to receive the IMS registration request sent by the UE, perform IMS registration for the UE(203), and initiate a third-party registration request to the service control unit (206);
a service control unit (206), adapted to perform third-party registration and notify the status of the UE (203) accessing the IMS network to the service discovery unit (202).

14. The system according to claim 13, wherein, the service control unit (206) is a stand-alone device or configured in the service discovery unit (202).

15. The system according to claim 10 or 14, wherein, the system further comprises:
a status server (205), adapted to monitor the status of the UE (203) after receiving the subscription request of the service discovery unit (202), and notify the information of the UE accessing the IMS network to the service discovery unit (202) after detecting that the UE accesses the IMS network;
the service discovery unit (202), adapted to subscribe to the status of the UE (203) from the status server.

16. The system according to claim 15, wherein, the status server (205) is further adapted to notify the status change of the UE (203) to the service discovery unit (202) after detecting that the status change of the UE (203);
the service discovery unit (202), after receiving status change information of the UE, adapted to send the generated streaming service information to the UE (203) according to status change information of the UE (203).

17. The system according to claim 10, wherein, the system further comprises a user data management unit (207), adapted to store the subscription data of the user, the service discovery unit (202) adapted to obtain the subscription data of the user from the user data management unit (207), and send streaming service information according to the subscription data.

18. A service discovering apparatus, comprising:
a service implementing unit (208), adapted to generate streaming service information according to the received EPG, and send the streaming service information; and
a transceiver unit (209), adapted to receive an EPG and send the EPG to the service implementing unit (208), and send the streaming service information provided by the service implementing unit (208) according to obtained the information of the UE accessing the IMS network.

19. The apparatus according to claim 18, wherein, the service discovering apparatus further comprises an EPG generating unit 201, adapted to generate an EPG and send the EPG to the transceiver unit (209).

20. The apparatus according to claim 18, wherein, the service discovery apparatus further comprises a service control unit (206), adapted to receive a third-party registration request, perform third-party registration, and notify the information of the UE accessing the IMS network to the transceiver unit (209).
